# EUROPÄISCHE PATENTSCHRIFT

(11) **EP 2 095 342 B1**
(45) Veröffentlichungstag und Bekanntmachung des Hinweises auf die Patenterteilung: **19.06.2019**
(21) Anmeldenummer: 07818847.1
(22) Anmeldetag: 09.10.2007
(51) Int. Cl.: B41M 3/14, G07D 7/12, B42D 15/00, G06K 19/14, C09K 11/08, D21H 21/40

(54) **ECHTHEITSMERKMAL IN FORM EINER LUMINESZIERENDEN SUBSTANZ**
AUTHENTICITY MARK IN THE FORM OF A LUMINESCENT SUBSTANCE
CARACTÉRISTIQUE D'AUTHENTICITÉ SOUS FORME DE SUBSTANCE LUMINESCENTE

(30) Priorität: 10.10.2006 DE 102006047852
(43) Veröffentlichungstag der Anmeldung: 02.09.2009
(73) Patentinhaber: Giesecke+Devrient Currency Technology GmbH, 81677 München (DE)
(72) Erfinder: HEER, Stephan, 81667 München (DE); GIERING, Thomas, 85614 Kirchseeon (DE); STOCK, Kai, Uwe, 82031 Grünwald (DE)
(86) Internationale Anmeldenummer: PCT/EP2007/008774
(87) Internationale Veröffentlichungsnummer: WO 2008/043523

(56) Entgegenhaltungen:
- WO-A-02/070279
- WO-A-2005/036478

## Beschreibung

Die Erfindung betrifft ein bedrucktes Wertdokument mit zumindest einem Echtheitsmerkmal in Form einer lumineszierenden Substanz auf der Basis von Wirtsgittern, die mit einem oder mehreren Ionen dotiert sind.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente zur Produktsicherung zu verstehen.

Die Absicherung von Wertdokumenten gegen Fälschung mittels lumineszierender Substanzen ist bereits seit langem bekannt. Die Verwendung von Übergangsmetallen und Seltenerdmetallen als lumineszierende Ionen wurden bereits diskutiert. Solche Ionen haben den Vorteil, dass sie, nach entsprechender Anregung, eine oder mehrere charakteristische schmalbandige Lumineszenzen zeigen, die einen sicheren Nachweis und die Abgrenzung gegenüber anderen Spektren erleichtern. Auch Kombinationen von Übergangsmetallen und/oder Seltenerdmetallen wurden schon diskutiert. Solche Substanzen haben den Vorteil, dass, zusätzlich zu den obengenannten Lumineszenzen, sogenannte Energietransferprozesse beobachtet werden, die zu komplizierteren Spektren führen können. Bei diesen Energietransferprozessen kann ein Ion seine Energie auf einen anderes Ion übertragen und die Spektren können dann aus mehreren schmalbandigen Linien bestehen, die charakteristisch für die beiden Ionen sind.

Ionen mit charakteristischen Eigenschaften, die sich zur Absicherung von Wertdokumenten eignen, sind jedoch in ihrer Zahl beschränkt. Zudem lumineszieren Ionen der Übergangsmetalle und/oder Seltenerdmetalle bei einer oder mehreren charakteristischen Wellenlängen, die von der Natur des Ions und des Wirtsgitters abhängig sind und vorausgesagt werden können. Auch Energietransferprozesse führen zu diesen charakteristischen Lumineszenzen der beteiligten Ionen.

DE 198 04 021 A1 beschreibt ein Wertdokument mit zumindest einem Echtheitsmerkmal in Form einer lumineszierenden Substanz auf der Basis von dotierten Wirtsgittern.

EP 1 370 424 B1 beschreibt ein bedrucktes Wertdokument mit zumindest einem Echtheitsmerkmal in der Form einer lumineszierenden Substanz auf der Basis von Wirtsgittern, die mit Ionen der Elektronenkonfiguration (3*d*)² dotiert sind. WO2005/036478 offenbart ebenfalls ein Echtheitsmerkmal in Form einer lumineszierenden Substanz auf der Basis von dotierten Wirtsgittern für Wertdokumente.

Ausgehend von diesem Stand der Technik liegt der Erfindung die Aufgabe zugrunde, die Anzahl und Komplexität von Substanzen, die sich als Echtheitskennzeichnung für Wertdokumente eignen, zu erhöhen und insbesondere Wertdokumente mit Echtheitsmerkmalen in Form von lumineszierenden Substanzen zu schaffen, die sich von Wertdokumenten mit bisher bekannten Substanzen durch ein charakteristisches und neues Lumineszenzspektrum und anderen spektroskopische Eigenschaften unterscheiden.

Die Lösung dieser Aufgabe ergibt sich aus den unabhängigen Ansprüchen. Weiterbildungen sind Gegenstand der Unteransprüche.

Die Erfindung beruht auf der Erkenntnis, dass bestimmte Typen von Ionen, die in geeignete Wirtsgitter dotiert werden mit gleichartigen Ionen oder mit anderen Ionen des Wirtsgitters Austauschwechselwirkung eingehen. Austauschwechselwirkungen führen zu kooperativen Effekten. Kooperative Effekte beruhen auf den Eigenschaften des austauschgekoppelten Systems, d. h. einem zwei- oder mehrkernigen Cluster von Ionen.

Austauschwechselwirkungen haben ihren Ursprung in den elektrostatischen Kräften denen die ungepaarten Elektronen von benachbarten magnetischen Ionen ausgesetzt sind. Unter magnetischen Ionen werden Ionen mit ungepaarten Elektronen verstanden. Austauschwechselwirkungen führen erfindungsgemäss wie in Anspruch 1 definiert zu messbaren Aufspaltungen der elektronischen Zustände.

Austauschwechselwirkungen treten ganz allgemein in Clustern von *dⁿ*-Metallen (Übergangsmetalle), *fⁿ*-Metallen (Seltenerdmetalle) oder Kombinationen von diesen auf. Die Stärke der Austauschwechselwirkung ist aber sehr unterschiedlich. In *dⁿ*-Metallclustern sind die Austauschwechselwirkungen am stärksten und energetische Aufspaltungen der Clusterzustände können bis zu einigen hundert Wellenzahlen betragen. Bei den *fⁿ*-Metallclustern sind die Austauschwechselwirkungen sehr viel geringer und die Aufspaltungen von Clusterzuständen sind typischerweise kleiner als eine Wellenzahl.

Besonders geeignet sind austauschgekoppelte Systeme von *dⁿ*-Metallclustern oder *dⁿ*-*fⁿ*-Metallclustern. In solchen Systemen können Austauschwechselwirkungen derart groß sein, dass sie zu gut messbaren kooperativen Effekten führen. Der Vorteil solcher Substanzen liegt darin, dass sich diese kooperativen Effekte deutlich von den Eigenschaften der Ionen, die diese Austauschwechselwirkung nicht erfahren, unterscheiden.

Zwei der kooperativen Effekte eignen sich in diesem Zusammenhang besonders, es handelt sich hierbei um kooperative Effekte, die sich im Lumineszenzverhalten äußern. Dies schließt jedoch die Verwendung von anderen kooperativen optischen und/oder magnetischen Effekten von austauschgekoppelten Clustern nicht aus.

In einer ersten vorteilhaften Ausgestaltung der Erfindung wird ein geeignetes Wirtsgitter mit Ionen derart dotiert, dass sich austauschgekoppelte Ionencluster dieser dotierten Ionen bilden, deren Lumineszenzspektrum nur verstanden werden kann, wenn der austauschgekoppelte Cluster als lumineszierende Einheit betrachtet wird. Das Lumineszenzspektrum der austauschgekoppelten Cluster unterscheidet sich erfindungsgemäss wie in Anspruch 1 definiert deutlich von den Einzelionen Lumineszenzspektren der dotierten Ionen. Bevorzugt sind Ionen der Übergangsmetalle, die als tiefstliegenden Lumineszenzübergang einen spinverbotenen Übergang haben, der zugleich einem intrakonfigurellen Übergang entspricht. Aus den Tanabe-Sugano Diagrammen für (3*d*)*ⁿ* Ionen finden sich die geeigneten Elektronenkonfigurationen (3*d*)², (3*d*)³ und (3*d*)⁶. Bevorzugt sind die Ionen Ti²⁺, V²⁺, V³⁺, Cr³⁺, Cr⁴⁺, Mn⁴⁺, Mn⁵⁺ und Ni²⁺. Die isoelektronischen Ionen der (4*d*)ⁿ und (5*d*)ⁿ Elektronenkonfigurationen werden auch in Betracht gezogen. Als Wirtsgitter kommen reine oder gemischte Verbindungen mit mindestens einem Vertreter aus der Gruppe der Metalle der Hauptgruppen I, II, Übergangsmetalle und/oder Seltenen Erden und mindestens einem Vertreter der Gruppe der Nichtmetalle bestehend aus den Hauptgruppen III bis VII des Periodensystems in Frage. Besonders bevorzugt sind Wirtsgitter, die zu starken Austauschwechselwirkungen in den Clustern führen.

In einer zweiten vorteilhaften Ausgestaltung der Erfindung wird ein geeignetes Wirtsgitter mit Ionen dotiert, sodass sich austauschgekoppelte Cluster der dotierten Ionen mit den magnetischen Ionen des Wirtsgitters bilden. Wie oben bereits erwähnt, sollen magnetische Ionen ungepaarte Elektronen aufweisen. Das Lumineszenzspektrum einer solchen Substanz kann nur verstanden werden, wenn der austauschgekoppelte Cluster als lumineszierende Einheit betrachtet wird. Das Clusterspektrum ist erfindungsgemäss wie in Anspruch 1 definiert im Unterschied zu den Lumineszenzspektren der dotierten Ionen oder aber der magnetischen Ionen des Wirtsgitters komplett verschieden. Als Wirtsgitter kommen reine oder gemischte Verbindungen mit mindestens einem Vertreter der Seltenen Erden (Ce bis Yb) und mindestens einem Vertreter der Gruppe der Nichtmetalle bestehend aus den Hauptgruppen III bis VII des Periodensystems in Frage. Zudem kommen dieselben Vertreter und mindestens ein zusätzlicher Vertreter aus der Gruppe der Metalle der Hauptgruppen I, II, und/oder der Übergangsmetalle in Frage. Wirtsgitter enthalten Erfindungsgemäss wie in Anspruch 1 definiert die Seltenerdmetallionen Ce³⁺, Pr³⁺, Sm³⁺, Eu³⁺, Gd³⁺ und Tb³⁺. Besonders bevorzugt sind solche, die zu einer starken Austauschwechselwirkung in den Clustern mit den dotierten Ionen führen. Für die Dotierung sind Ionen der Übergangsmetalle bevorzugt, die als tiefstliegenden Lumineszenzübergang einen spinverbotenen Übergang haben, der zugleich einem intrakonfigurellen Übergang entspricht. Aus den Tanabe-Sugano Diagrammen für (3*d*)*ⁿ* Ionen finden sich die geeigneten Elektronenkonfigurationen (3*d*)², (3*d*)³ und (3*d*)⁶. Besonders bevorzugt sind die Ionen Ti²⁺, V²⁺, V³⁺, Cr³⁺, Cr⁴⁺, Mn⁴⁺, Mn⁵⁺ und Ni²⁺. Auch die isoelektronischen Ionen der (4*d*)ⁿ und (5*d*)ⁿ Elektronenkonfigurationen sind geeignet.

Weitere Ausführungsformen und Vorteile der Erfindung werden im Folgenden anhand der Figuren, deren Beschreibungen und der Beispiele erläutert.

Es zeigt:
- Figur 1: Energieniveauschemata und Lumineszenzübergänge einer Substanz gemäß einer ersten Ausgestaltung im Vergleich zu einer herkömmlichen lumineszierenden Substanz auf der Basis eines Cr³⁺ dotierten Wirtsgitters,
- Figur 2: Lumineszenzsspektren der Substanz gemäß der ersten Ausgestaltung im Vergleich zu einer herkömmlichen lumineszierenden Substanz auf der Basis eines Cr³⁺ dotierten Wirtsgitters,
- Figur 3: Energieniveauschemata und Lumineszenzübergänge einer Substanz einer zweiten Ausgestaltung im Vergleich zu den herkömmlichen lumineszierenden Substanzen auf der Basis eines Cr³⁺ dotierten oxidischen Europiumwirtsgitters,
- Figur 4: Lumineszenzspektren der Substanz gemäß der zweiten Ausgestaltung im Vergleich zu den Lumineszenzen der beiden herkömmlichen lumineszierenden Substanzen auf der Basis eines Cr³⁺ dotierten oxidischen Europiumwirtsgitters, und
- Figur 5: ein erfindungsgemäßes Sicherheitselement im Querschnitt.

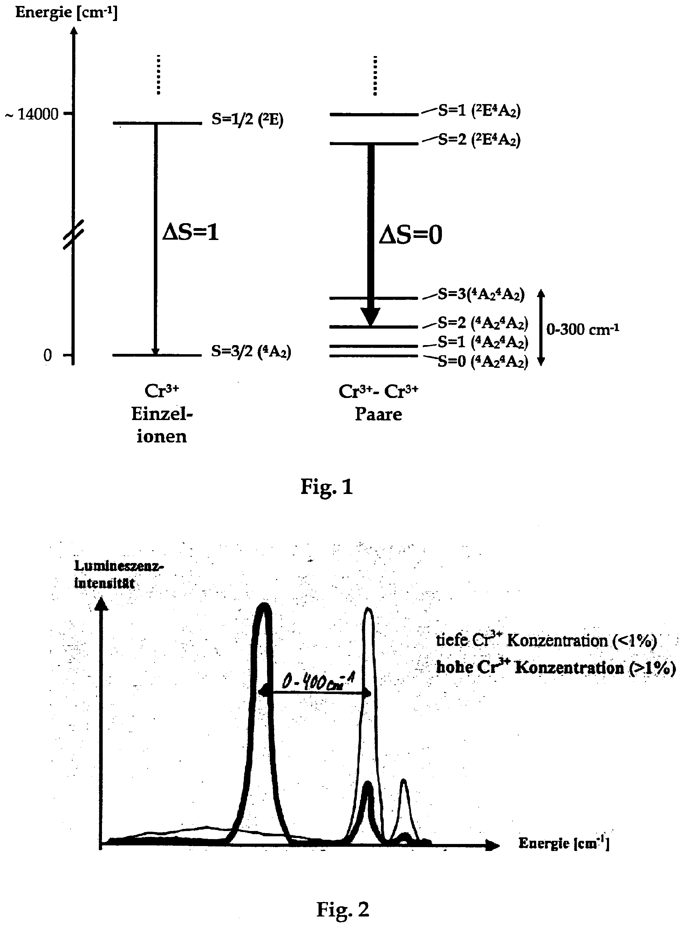

Zur Verdeutlichung der erfindungsmässigen Vorteile der ersten vorteilhaften Ausgestaltung wird als Beispiel einer solchen Substanz ein Cr³⁺ dotiertes oxidisches Wirtsmaterial herangezogen. Dazu dienen die Darstellungen in den Figuren 1 und 2. Cr³⁺ hat die Elektronenkonfiguration (3*d*)³ und in oktaedrischer oxidischer Koordination wird der Grundzustand mit dem Symmetrietermsymbol ⁴A₂ bezeichnet. Der erste angeregte Zustand ist in einem solchen Wirtsgitter im allgemeinen der ²E Zustand. Ein solches Material mit tiefer Cr³⁺-Konzentration luminesziert bei nicht zu hoher Temperatur nach höherenergetischer Anregung typischerweise im roten Spektralbereich. Der beobachtete Lumineszenzübergang ist dabei ein spinverbotener Übergang, weil sich der Gesamtspin S um eine Einheit ändert (Δ*S*=1). Dies führt zu einer sehr schmalbandigen Lumineszenz mit einer langen Lebenszeit, typischerweise im Bereich von 10 ms.

Wird die Chromkonzentration im gleichen Wirtsmaterial erhöht, beobachtet man eine neue, sehr schmalbandige Lumineszenzlinie mit einer Lebenszeit, die viel kleiner ist, typischerweise 10- bis 100-mal kleiner. Diese Lumineszenz stammt von austauschgekoppelten Cr³⁺-Cr³⁺ Paaren. Die Stärke dieser zusätzlichen Linie ist abhängig von der Cr³⁺ Konzentration im Material und von der Stärke der Austauschwechselwirkung, die wiederum abhängig von der Wahl des Wirtsgitters ist. Die energetische Position der Linie kann um mehrere hundert Wellenzahlen verschoben sein (siehe Figur 2). Der Grund dafür ist, dass die Austauschwechselwirkung zur Aufspaltung des Grund- und des ersten angeregten Zustandes in mehrere Zustände führt, die am besten durch deren Gesamtspin S beschrieben werden, wie in Figur 1 schematisch dargestellt. Dieser Übergang ist ein spinerlaubter Übergang mit Δ*S*=0. Solche spinerlaubten Übergänge sind typischerweise 100-mal stärker als spinverbotene, was auch an der verkürzten Lebenszeit beobachtet werden kann. Die anderen möglichen Lumineszenzübergänge im Cluster sind ebenfalls spinverboten und werden im Spektrum, auf Grund ihrer enormen Schwäche relativ zum spinerlaubten Übergang, nicht beobachtet. Der Hauptvorteil dieser lumineszierenden Substanzen gegenüber anderen bekannten lumineszierenden Substanzen liegt in der stark verkürzten Lebenszeit der Lumineszenz bei gleichbleibender Ähnlichkeit in Bezug auf die spektrale Position und in Bezug auf die Form der Lumineszenzbande. Ein weiterer Vorteil besteht in der Möglichkeit, die spektrale Position der Lumineszenzbande zu verschieben.

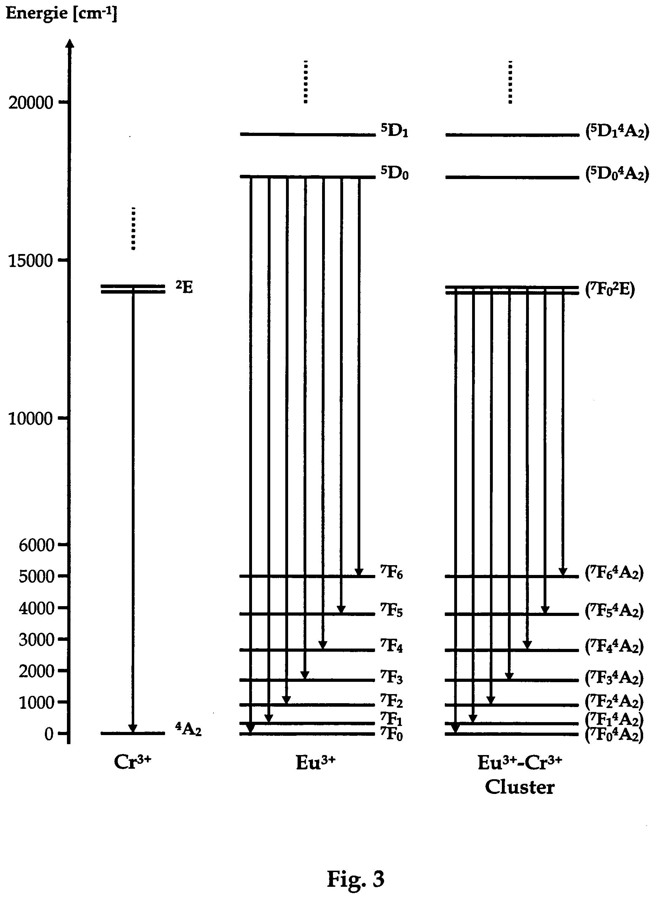

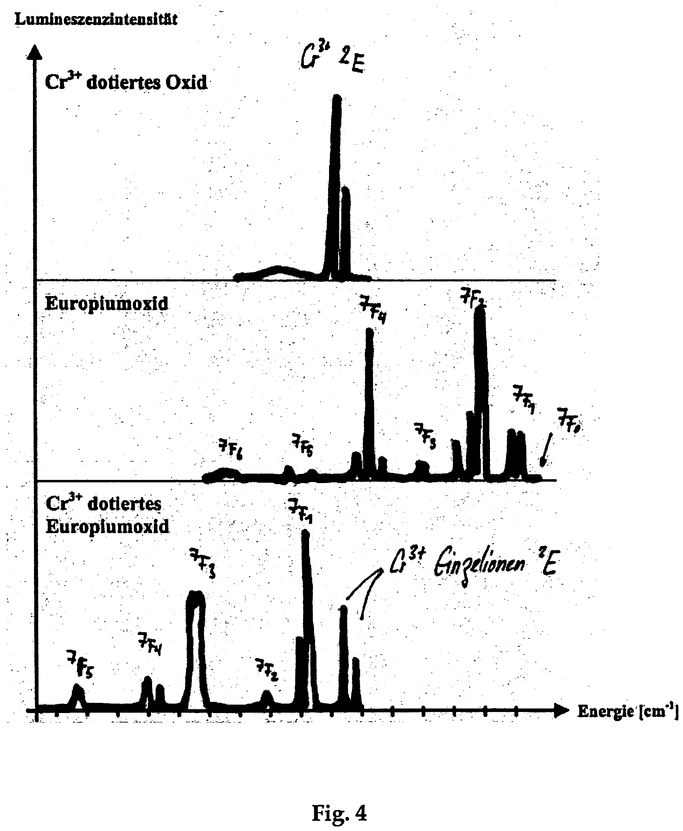

Zur Verdeutlichung der erfindungsmässigen Vorteile der zweiten vorteilhaften Ausführung wird als Beispiel einer solchen Substanz ein Cr³⁺ dotiertes oxidisches Europiumwirtsmaterial herangezogen. Dazu dienen die Darstellungen in den Figuren 3 und 4. Cr³⁺ hat die Elektronenkonfiguration (3*d*)³ und in oktaedrischer oxidischer Koordination wird der Grundzustand mit dem Symmetrietermsymbol ⁴A₂ bezeichnet. Der erste angeregte Zustand ist in einem solchen Wirtsgitter im allgemeinen der ²E Zustand. Ein solches Material luminesziert nach höherenergetischer Anregung typischerweise im roten Spektralbereich. Beobachtet werden zwei schmalbandige Lumineszenzlinien mit einem schwachen Photonenseitenband. Ein oxidisches Europiumwirtsgitter zeigt nach höherenergetischer Anregung ein typisches Eu³⁺ Lumineszenzspektrum. Die Übergänge entsprechen den sogenannten *f*-*f* Übergängen des Eu³⁺, die mit den Termsymbolen ^{2*S*+1}*L_{J}* bezeichnet werden, wobei *S* den Gesamtspin, *L* der totalen orbitalen Drehimpuls und *J* den totalen Drehimpuls der Zustände bezeichnet. Beobachtet werden schmalbandige Lumineszenzübergänge vom Typ ⁵*D*₀→⁷*F_{J}* im gelben bis roten spektralen Bereich.

Wird ein oxidisches Europiumwirtsgitter nun mit Cr³⁺ Ionen dotiert, beobachtet man nach Anregung des Cr³⁺ Ions eine neue und charakteristische Lumineszenz, die nur verstanden werden kann, wenn man austauschgekoppelte Eu³⁺-Cr³⁺ Cluster in Betracht zieht. Die neuen Lumineszenzübergänge entsprechen Übergängen aus dem (⁷F₀²E) Zustand in die (⁷F*_{J}*⁴A₂) Grundzustandsniveaus im Eu³⁺-Cr³⁺ Cluster. Die Übergänge werden im Eu³⁺-Cr³⁺ Cluster mit einer Doppeltermbezeichnung bezeichnet, zum Beispiel (⁷F₀⁴A₂) für den Grundzustand des Clusters. Der Hauptvorteil dieser lumineszierenden Substanzen gegenüber anderen bekannten lumineszierenden Substanzen liegt in dem vollständig neuen Lumineszenzspektrum bei gleichbleibender Schmalbandigkeit der Lumineszenzübergänge.

Durch Variation und Kombination der zuvor genannten Substanzen eröffnen sich zahlreiche Möglichkeiten, die Lumineszenzspektren der erfindungsgemäßen lumineszierenden Substanzen zu beeinflussen und so eine Vielzahl von Sicherheitsmerkmalen zu produzieren. Die sich einstellenden kooperativen Effekte zeigen eine ausgeprägte Temperaturabhängigkeit der Lumineszenzen. Dies ist ein weiterer Vorteil, der, bei geeineter Wahl der Substanz, ein Ein- und ein Auschalten dieser Effekte als Funktion der Temperatur, bei der die Lumineszenzen gemessen werden, zulässt. Es bietet sich also die Möglichkeit einer automatisierten Prüfung bei Raumtemperatur oder aber einer selektiven Prüfung bei einer wohldefinierten Temperatur an.

Neben der Auswertung der Lumineszenzspektren kann ebenso die Lumineszenzlebensdauer zur Unterscheidung herangezogen werden. Bei der Auswertung können neben der Energie der Lumineszenzlinien auch deren Anzahl und/oder Form und/oder deren Intensitäten berücksichtigt werden, womit sich eine beliebige Codierung darstellen lässt.

Ebenso ist es möglich, über die Dotierung zusätzlicher Ionen, wie Übergangsmetallionen oder Sletenerdmetallionen, weitere lumineszierende Zentren ins Wirtsgitter einzubringen und so eine kombinierte Lumineszenz beider Systeme oder einen Energieübertrag zwischen den Systemen zu erreichen.

wird das Wertdokument statt mit einer mit mehreren der erfindungsmässigen lumineszierenden Substanzen markiert, so lässt sich die Anzahl der unterscheidbaren Kombinationen weiter steigern.

Die Markierung kann dabei entweder an verschiedenen Stellen des Wertdokuments oder am gleichen Ort erfolgen. Wird die Markierung an verschiedenen Stellen des Wertdokuments auf- bzw. eingebracht, so kann ein räumlicher Code, z. B. im einfachsten Fall ein Barcode, erzeugt werden.

Weiterhin lässt sich die Fälschungssicherheit des Wertdokuments erhöhen, wenn die speziell gewählte lumineszierende Substanz zum Beispiel in einem Wertdokument mit anderen Informationen des Wertdokuments verknüpft wird, sodass eine Überprüfung mittels eines geeigneten Algorithmus möglich ist. Diese Informationen können das Wertdokument betreffen, z. B. eine Seriennummer, die räumliche Lage bestimmter Bestandteile des Wertdokuments usw.

Selbstverständlich kann das Wertdokument neben der erfindungsgemäßen lumineszierenden Substanz noch weitere zusätzliche Echtheitsmerkmale aufweisen, die z. B. auf klassischer Lumineszenz und/oder Magnetismus beruhen.

Die erfindungsgemäßen lumineszierenden Substanzen können gemäß der Erfindung auf verschiedenste Art und Weise in das Wertdokument eingebracht werden. So können die lumineszierenden Substanzen beispielsweise in eine Druckfarbe eingebracht werden. Aber auch ein Zumischen der lumineszierenden Substanzen zur Papiermasse oder Kunststoffmasse bei der Herstellung eines Wertdokuments auf der Basis von Papier oder Kunststoff ist möglich. Ebenso können die lumineszierenden Substanzen auf oder in einem Kunststoffträgermaterial vorgesehen werden, welches beispielsweise wiederum zumindest teilweise in die Papiermasse eingearbeitet werden kann. Das Trägermaterial, dass auf einem geeigneten Polymer, wie zum Beispiel PMMA basiert und in das die erfindungsgemäße lumineszierende Substanz eingebettet ist, kann hierbei die Form eines Sicherheitsfadens, einer Melierfaser oder einer Planchette haben. Ebenso lässt sich zur Produktsicherung die lumineszierende Substanz zum Beispiel direkt in das Material des abzusichernden Gegenstandes einbringen, z. B. in Gehäuse und Plastikflaschen.

Das Kunststoff- und/oder Papierträgermaterial kann jedoch auch an jedem beliebeigen anderen Gegenstand, zum Beispiel zur Produktsicherung befestigt werden. Das Trägermaterial ist in diesem Fall vorzugsweise in der Form eines Etiketts ausgebildet. Wenn das Trägermaterial Bestandteil des zu sichernden Produkts ist, wie es zum Beispiel bei Aufreissfäden der Fall ist, ist selbstverständlich auch jede andere Formgebung möglich. In bestimmten Anwendungsfällen kann es sinnvoll sein, die lumineszierende Substanz als unsichtbare Mischung als Beschichtung auf dem Wertdokument vorzusehen. Sie kann dabei vollflächig oder auch in der Form von bestimmten Mustern, wie zum Beispiel Streifen, Linien, Kreisen oder auch in Form von alphanumerischen Zeichen vorliegen. Um die Unsichtbarkeit der lumineszierenden Substanz zu gewährleisten, muss erfindungsgemäß entweder eine farblose lumineszierende Substanz in der Druckfarbe oder dem Beschichtungslack verwendet werden oder eine farbige lumineszierende Substanz in einer so geringen Konzentration, dass die Transparenz der Beschichtung gerade noch gegeben ist. Alternativ oder zusätzlich kann auch das Trägermaterial oder die die lumineszierende Substanz enthaltende Druckfarbe geeignet eingefärbt sein, so dass die lumineszierende Substanz aufgrund ihrer Farbe nicht wahrgenommen werden kann.

Üblicherweise werden die erfindungsgemässen lumineszierenden Substanzen in Form von Pigmenten verarbeitet. Zur besseren Verarbeitung oder zur Erhöhung ihrer Stabilität können die Pigmente insbesondere als individuell verkapselte Pigmentpartikel vorliegen oder mit einem anorganischen Material oder organischen Coating überzogen werden. Beispielsweise werden die einzelnen Pigmentpartikel der lumineszierenden Substanz hierzu mit einer Silikathülle umgeben und lassen sich so leichter in Medien dispergieren. Ebenso können verschiedene Pigmentpartikel einer Kombination gemeinsam verkapselt werden, zum Beispiel in Fasern, Fäden, Silikathüllen. So ist es zum Beispiel nicht mehr möglich, den "Code" der Kombination zu verändern. Unter "Verkapselung" ist dabei ein vollständiges Umhüllen der Pigmentpartikel zu verstehen, während mit "Coating" auch das teilweise Umhüllen bzw. Beschichten der Pigmentpartikel gemeint ist.

Im Folgenden werden einige Beispiele für die Synthese der erfindungsgemäßen oxidischen Materialien aufgelistet:

### Beispiel 1

### Herstellung von chromaktiviertem Yttrium-Granat (Cr-Cr: Y₃Al₅O₁₂)

Es werden 42,11 g Aluminiumoxid (Al₂O₃), 1,02 g Chromoxid (Cr₂O₃), 56,87 g Yttriumoxid (Y₂O₃) abgewogen und zusammen mit 100 g entwässertem Natriumsulfat (Na₂SO₄) homogen vermischt. Die Mischung wird in Korundtiegel gefüllt und bei einer Temperatur von 1150°C für eine Dauer von 12 Stunden erhitzt. Das entstehende Reaktionsprodukt wird nach dem Abkühlen auf die gewünschte Korngröße zerkleinert und im Wasserbad von Resten des Flußmittels befreit. Reste des eingesetzten Chromoxids oder daraus entstandene Nebenprodukte, z.B. Natriumchromat, werden durch Schwefelsäure/Eisensulfat zu Chrom(III) reduziert und abgetrennt. Das entstandene Produkt wird abfiltriert und bei 100°C getrocknet.

### Beispiel 2

### Herstellung von chromaktiviertem Yttrium-Perowskit (Cr-Cr:YAlO₃)

Es werden 30,32 g Aluminiumoxid (Al₂O₃), 1,02 g Chromoxid (Cr₂O₃), 68,66 g Yttriumoxid (Y₂O₃) abgewogen und zusammen mit 100 g entwässertem Natriumsulfat (Na₂SO₄) homogen vermischt. Die Mischung wird in Korundtiegel gefüllt und bei einer Temperatur von 1150°C für eine Dauer von 18 Stunden erhitzt. Das entstehende Reaktionsprodukt wird nach dem Abkühlen auf die gewünschte Korngröße zerkleinert und im Wasserbad von Resten des Flußmittels befreit. Reste des eingesetzten Chromoxids oder daraus entstandene Nebenprodukte, z.B. Natriumchromat, werden durch Schwefelsäure/Eisensulfat zu Chrom(III) reduziert und abgetrennt. Das entstandene Produkt wird abfiltriert und bei 100°C getrocknet.

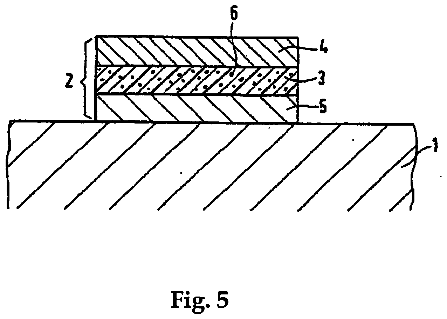

Figur 5 zeigt eine Ausführungsform des erfindungsgemäßen Sicherheitselements. Das Sicherheitselement besteht in diesem Fall aus einem Etikett 2, dass sich aus einer Papier- und/oder Kunststoffschicht 3, einer transparenten Abdeckschicht 4 sowie einer Klebstoffschicht 5 zusammensetzt. Dieses Etikett 2 ist über die Klebeschicht 5 mit einem beliebeigen Substrat 1 verbunden. Bei diesem Substrat 1 kann es sich um Wertdokumente, Ausweise, Pässe, Urkunden oder dergleichen aber auch um andere zu sichernde Gegenstände, wie zum Beispiel CDs, Verpackungen o. ä. handeln. Die lumineszierende Substanz 6 ist in diesem Ausführungsbeispiel im Volumen der Schicht 3 enthalten.

Alternativ könnte die lumineszierende Substanz auch in einer nicht gezeigten Druckfarbe enthalten sein, die auf eine der Etikettenschichten, vorzugsweise auf die Oberflächen der Schicht 3 aufgedruckt wird.

Statt die lmineszierende Substanz in oder auf einem Trägermaterial vorzusehen, das anschließend als Sicherheitselement auf einen Gegenstand befestigt wird, ist es gemäß der Erfindung auch möglich, die lumineszierende Substanz direkt in das zu sichernde Wertdokument bzw. auf dessen Oberfläche in Form einer Beschichtung aufzubringen.

## Patentansprüche

1. Echtheitsmerkmal in Form einer lumineszierenden Substanz auf der Basis von dotierten Wirtsgittern für Wertdokumente, **dadurch gekennzeichnet, dass**
dotierte Ionen austauschgekoppelte Ionencluster bilden und kooperative Effekte aufweisen, die aus der Austauschwechselwirkung zwischen ungepaarten Elektronen benachbarter Ionen resultieren, wobei die Austauschwechselwirkungen zu messbaren Aufspaltungen der elektronischen Zustände führen und das Lumineszenzspektrum der austauschgekoppelten Cluster sich deutlich von den Einzelionen-Lumineszenzspektren der dotierten Ionen unterscheidet, wobei die dotierten Ionen die Elektronenkonfiguration (3*d*)², (3*d*)³ und (3*d*)⁶ oder entsprechende Elektronenkonfigurationen der (4*d*) oder (5*d*) Übergangsmetalle haben; oder
dotierte Ionen mit magnetischen Ionen des Wirtsgitters austauschgekoppelte Cluster bilden und kooperative Effekte aufweisen, die aus der Austauschwechselwirkung zwischen ungepaarten Elektronen benachbarter Ionen resultieren, wobei die Austauschwechselwirkungen zu messbaren Aufspaltungen der elektronischen Zustände führen und das Clusterspektrum im Unterschied zu den Lumineszenzspektren der dotierten Ionen oder aber der magnetischen Ionen des Wirtsgitters komplett verschieden ist, wobei die dotierten Ionen die Elektronenkonfiguration (3*d*)², (3*d*)³ und (3*d*)⁶ oder entsprechende Elektronenkonfigurationen der (4*d*) oder (5*d*) Übergangsmetalle haben und die Ionen des Wirtsgitters von der Gruppe bestehend aus Ce³⁺, Pr³⁺, Sm³⁺, Eu³⁺, Gd³⁺ und Tb³⁺ gewählt sind.

2. Echtheitsmerkmal nach Anspruch 1, wobei
dotierte Ionen austauschgekoppelte Ionencluster bilden und kooperative Effekte aufweisen, die aus der Austauschwechselwirkung zwischen ungepaarten Elektronen benachbarter Ionen resultieren, wobei die Austauschwechselwirkungen zu messbaren Aufspaltungen der elektronischen Zustände führen und das Lumineszenzspektrum der austauschgekoppelten Cluster sich deutlich von den Einzelionen-Lumineszenzspektren der dotierten Ionen unterscheidet, wobei die dotierten Ionen die Elektronenkonfiguration (3*d*)², (3*d*)³ und (3*d*)⁶ oder entsprechende Elektronenkonfigurationen der (4*d*) oder (5*d*) Übergangsmetalle haben; und
es sich bei den Wirtsgittern um Verbindungen mit mindestens einem Vertreter aus der Gruppe der Metalle der Hauptgruppen I, II, Übergangsmetalle und/oder Seltenen Erden und mindestens einem Vertreter aus den Hauptgruppen III bis VII des Periodensystems der Elemente handelt.

3. Echtheitsmerkmal nach Anspruch 1, wobei
dotierte Ionen mit magnetischen Ionen des Wirtsgitters austauschgekoppelte Cluster bilden und kooperative Effekte aufweisen, die aus der Austauschwechselwirkung zwischen ungepaarten Elektronen benachbarter Ionen resultieren, wobei die Austauschwechselwirkungen zu messbaren Aufspaltungen der elektronischen Zustände führen und das Clusterspektrum im Unterschied zu den Lumineszenzspektren der dotierten Ionen oder aber der magnetischen Ionen des Wirtsgitters komplett verschieden ist, wobei die dotierten Ionen die Elektronenkonfiguration (3*d*)², (3*d*)³ und (3*d*)⁶ oder entsprechende Elektronenkonfigurationen der (4*d*) oder (5*d*) Übergangsmetalle haben und die Ionen des Wirtsgitters von der Gruppe bestehend aus Ce³⁺, Pr³⁺, Sm³⁺, Eu³⁺, Gd³⁺ und Tb³⁺ gewählt sind; und
es sich bei den Wirtsgittern um Verbindungen mit mindestens einem Vertreter der Seltenen Erden und mindestens einem Vertreter der Nichtmetalle aus den Hauptgruppen III bis VII des Periodensystems der Elemente handelt, wobei der mindestens eine Vertreter der Seltenen Erden aus der Gruppe bestehend aus Ce³⁺, Pr³⁺, Sm³⁺, Eu³⁺, Gd³⁺ und Tb³⁺ gewählt ist.

4. Echtheitsmerkmal nach Anspruch 3, wobei diese Verbindungen zusätzlich einen Vertreter aus der Gruppe der Metalle der Hauptgruppe I, II und/oder der Übergangsmetalle enthalten.

5. Echtheitsmerkmal nach einem der Ansprüche 1 bis 4, wobei die lumineszierende Substanz als Pigmentpartikel vorliegt.

6. Wertdokument mit einem Echtheitsmerkmal nach einem der Ansprüche 1 bis 5, wobei das Wertdokument aus Papier und/oder Kunststoff besteht.

7. Wertdokument nach Anspruch 6, wobei das Echtheitsmerkmal in das Volumen des Wertdokumentes eingebracht und/oder auf das Wertdokument aufgebracht ist.

8. Wertdokument nach Anspruch 6 oder 7, wobei die lumineszierende Substanz als unsichtbare, zumindest teilweise Beschichtung auf das Wertdokument aufgebracht ist.

9. Wertdokument nach einem der Ansprüche 6 bis 8, wobei die lumineszierende Substanz einer Druckfarbe zugemischt ist.

10. Wertdokument nach einem der Ansprüche 6 bis 9, wobei die lumineszierende Substanz mit mindestens einem anderen Echtheitsmerkmal kombiniert wird.

11. Wertdokument nach einem der Ansprüche 6 bis 10, wobei mindestens zwei lumineszierenden Substanzen eine spektrale Codierung in mindestens einer räumlichen Dimension bilden.

12. Sicherheitselement, welches ein Trägermaterial und zumindest ein Echtheitsmerkmal gemäß einem der Ansprüche 1 bis 5 aufweist, wobei das Echtheitsmerkmal in dem Trägermaterial eingebettet und/oder auf das Trägermaterial aufgebracht ist.

13. Sicherheitselement nach Anspruch 12, wobei das Sicherheitselement die Form eines Streifens oder Bandes aufweist.

14. Sicherheitselement nach Anspruch 12 oder 13, wobei das Trägermaterial als Sicherheitsfaden, Planchette oder Melierfaser ausgebildet ist.

15. Sicherheitselement nach einem der Ansprüche 12 bis 14, wobei das Sicherheitselement als Etikett ausgebildet ist.

16. Verfahren zur Herstellung eines Wertdokumentes nach einem der Ansprüche 6 bis 11 oder eines Sicherheitselements nach einem der Ansprüche 12 bis 15, wobei die lumineszierende Substanz einer Druckfarbe zugesetzt wird.

17. Verfahren zur Herstellung eines Wertdokumentes nach wenigstens einem der Ansprüche 6 bis 11 oder eines Sicherheitselements nach einem der Ansprüche 12 bis 15, wobei die lumineszierende Substanz durch einen Beschichtungsprozess aufgetragen wird.

18. Verfahren zur Herstellung eines Wertdokumentes nach wenigstens einem der Ansprüche 6 bis 11 oder eines Sicherheitselements nach einem der Ansprüche 12 bis 15, wobei die lumineszierende Substanz in das Volumen des Wertdokumentes eingearbeitet wird.

19. Verfahren zur Herstellung eines Wertdokumentes nach wenigstens einem der Ansprüche 6 bis 11 oder eines Sicherheitselements nach einem der Ansprüche 12 bis 15, wobei die lumineszierende Substanz durch entsprechend präparierte Melierfasern dem Wertdokument zugeführt wird.

20. Verfahren zu Herstellung eines Wertdokumentes nach wenigstens einem der Ansprüche 6 bis 11 oder eines Sicherheitselements nach einem der Ansprüche 12 bis 15, wobei die lumineszierende Substanz durch einen entsprechend präparierten Sicherheitsfaden dem Wertdokument zugeführt wird.

21. Prüfverfahren zur Echtheitsprüfung eines Echtheitsmerkmals nach einem der Ansprüche 1 bis 5 oder eines Wertdokumentes nach einem der Ansprüche 6 bis 11 oder eines Sicherheitselementes nach einem der Ansprüche 12 bis 15, wobei mindestens eine Eigenschaft der lumineszierenden Substanzen auswertet wird.

22. Prüfverfahren zur Echtheitsprüfung nach Anspruch 21, wobei Wellenlängen und/oder Anzahl und/oder Form und/oder Intensität der Emissionslinien der lumineszierenden Substanzen ausgewertet werden.

23. Prüfverfahren zur Echtheitsprüfung nach Anspruch 21 oder 22, wobei die Lumineszenzlebensdauern der lumineszierenden Substanzen ausgewertet werden.

24. Prüfverfahren zur Echtheitsprüfung nach einem der Ansprüche 21 bis 23, wobei die Auswertung bei verschiedenen Temperaturen erfolgt.

25. Prüfverfahren zur Echtheitsprüfung nach einem der Ansprüche 21 bis 24, wobei bei der Auswertung eine räumliche Verteilung der luminszierenden Substanz oder der lumineszierenden Substanzen überprüft wird.

## Claims

1. An authenticity feature in the form of a luminescent substance on the basis of doped host lattices for documents of value, **characterized in that**
doped ions form exchange-coupled ion clusters and have cooperative effects which result from the exchange interaction between unpaired electrons of neighboring ions, wherein the exchange interactions lead to measurable splittings of the electronic states and the luminescence spectrum of the exchange-coupled clusters distinctly differs from the luminescence spectra of individual ions of the doped ions, wherein the doped ions have the electron configuration (3*d*)², (3*d*)³ and (3*d*)⁶ or respective electron configurations of the (4*d*) or (5*d*) transition metals; or
doped ions form exchange-coupled clusters with magnetic ions of the host lattice and have cooperative effects which result from the exchange interaction between unpaired electrons of neighboring ions, wherein the exchange interactions lead to measurable splittings of the electronic states and the cluster spectrum, in contrast to the luminescence spectra of the doped ions or of the magnetic ions of the host lattice, is completely different, wherein the doped ions have the electron configuration (3*d*)², (3*d*)³ and (3*d*)⁶ or respective electron configurations of the (4*d*) or (5*d*) transition metals and the ions of the host lattice are chosen from the group consisting of Ce³⁺, Pr³⁺, Sm³⁺, Eu³⁺, Gd³⁺ and Tb³⁺.

2. The authenticity feature according to claim 1, wherein
doped ions form exchange-coupled ion clusters and have cooperative effects which result from the exchange interaction between unpaired electrons of neighboring ions, wherein the exchange interactions lead to measurable splittings of the electronic states and the luminescence spectrum of the exchange-coupled clusters distinctly differs from the luminescence spectra of individual ions of the doped ions, wherein the doped ions have the electron configuration (3*d*)², (3*d*)³ and (3*d*)⁶ or respective electron configurations of the, (4*d*) or (5*d*) transition metals; and
the host lattices are compounds with at least one representative from the group of the metals of the main groups I, II, transition metals and/ or rare earths and at least one representative from the main groups III to VII of the periodic system of elements.

3. The authenticity feature according to claim 1, wherein
doped ions form exchange-coupled clusters with magnetic ions of the host lattice and have cooperative effects which result from the exchange interaction between unpaired electrons of neighboring ions, wherein the exchange interactions lead to measurable splittings of the electronic states and the cluster spectrum, in contrast to the luminescence spectra of the doped ions or of the magnetic ions of the host lattice, is completely different, wherein the doped ions have the electron configuration (3*d*)², (3*d*)³ and (3*d*)⁶ or respective electron configurations of the (4*d*) or (5*d*) transition metals and the ions of the host lattice are chosen from the group consisting of Ce³⁺, Pr³⁺, Sm³⁺, Eu³⁺, Gd³⁺ and Tb³⁺; and
the host lattices are compounds with at least one representative of the rare earths and at least one representative of the non-metals from the main groups III to VII- of the periodic system of elements, wherein the at least one representative of the rare earths is chosen from group consisting of Ce³⁺, Pr³⁺, Sm³⁺, Eu³⁺, Gd³⁺ and Tb³⁺.

4. The authenticity feature according to claim 3, wherein such compounds additionally contain a representative from the group of the metals of the main group I, II and/or the transition metals.

5. The authenticity feature according to any of claims 1 to 4, wherein the luminescent substance is present as a pigment particle.

6. A document of value with an authenticity feature according to any of claims 1 to 5, wherein the document of value consists of paper and/or plastic.

7. The document of value according to claim 6, wherein the authenticity feature is incorporated in the volume of the document of value and/ or is applied onto the document of value.

8. The document of value according to claim 6 or 7, wherein the luminescent substance is applied as invisible, at least partial coating onto the document of value.

9. The document of value according to any of claims 6 to 8, wherein the luminescent substance is admixed to a printing ink.

10. The document of value according to any of claims 6 to 9, wherein the luminescent substance is combined with at least one different authenticity feature.

11. The document of value according to any of claims 6 to 10, wherein at least two luminescent substances form a spectral coding in at least one spatial dimension.

12. A security element, which has a carrier material and at least one authenticity feature according to any of the claims 1 to 5, wherein the authenticity feature is embedded in the carrier material and/ or is applied onto the carrier material.

13. The security element according to claim 12, wherein the security element has the form of a strip or band.

14. The security element according to claim 12 or 13, wherein the carrier material is formed as a security thread, planchet or mottling fiber.

15. The security element according to any of claims 12 to 14, wherein the security element is formed as a label.

16. A method for producing a document of value according to any of claims 6 to 11 or a security element according to any of claims 12 to 15, wherein the luminescent substance is added to a printing ink.

17. The method for producing a document of value according to at least one of claims 6 to 11 or a security element according to any of claims 12 to 15, wherein the luminescent substance is applied by a coating process.

18. The method for producing a document of value according to at least one of claims 6 to 11 or a security element according to any of claims 12 to 15, wherein the luminescent substance is worked into the volume of the document of value.

19. The method for producing a document of value according to at least one of claims 6 to 11 or a security element according to any of claims 12 to 15, wherein the luminescent substance is supplied to the document of value by accordingly prepared mottling fibers.

20. The method for producing a document of value according to at least one of claims 6 to 11 or a security element according to any of claims 12 to 15, wherein the luminescent substance is supplied to the document of value by an accordingly prepared security thread.

21. A test method for authenticity testing an authenticity feature according to any of claims 1 to 5 or a document of value according to any of claims 6 to 11 or a security element according to any of claims 12 to 15, wherein at least one property of the luminescent substances is evaluated.

22. The test method for authenticity testing according to claim 21, wherein wavelengths and/or number and/ or shape and/ or intensity of the emission lines of the luminescent substances are evaluated.

23. The test method for authenticity testing according to claim 21 or 22, wherein the luminescence lifetimes of the luminescent substances are evaluated.

24. The test method for authenticity testing according to any of claims 21 to 23, wherein the evaluation is effected at different temperatures.

25. The test method for authenticity testing according to any of claims 21 to 24, wherein when evaluating a spatial distribution of the luminescent substance or of the luminescent substances is verified.

## Revendications

1. Caractéristique d'authenticité sous forme d'une substance luminescente sur la base de réseaux hôtes dopés pour documents de valeur, **caractérisée en ce que**
des ions dopés constituent des clusters d'ions couplés par échange et présentent des effets coopératifs qui résultent de l'interaction d'échange entre des électrons non appariés d'ions avoisinants, cependant que les interactions d'échange conduisent à des décompositions mesurables des états électroniques et que le spectre de luminescence des clusters couplés par échange se différencie nettement des spectres de luminescence d'ions uniques des ions dopés, cependant que les ions dopés ont la configuration d'électrons (3*d*)², (3*d*)³ et (3*d*)³ ou des configurations d'électrons correspondantes des métaux de transition (4*d*) ou (5*d*) ; ou
des ions dopés constituent avec des ions magnétiques du réseau hôte des clusters couplés par échange et présentent des effets coopératifs qui résultent de l'interaction d'échange entre des électrons non appariés d'ions avoisinants, cependant que les interactions d'échange conduisent à des décompositions mesurables des états électroniques et que le spectre des clusters est, à la différence des spectres de luminescence des ions dopés ou bien des ions magnétiques du réseau hôte, complètement différent, cependant que les ions dopés ont la configuration d'électrons (3*d*)², (3*d*)³ et (3*d*)⁶ ou des configurations d'électrons correspondantes des métaux de transition (4d) ou (5*d*) et que les ions du réseau hôte sont choisis parmi le groupe constitué par Ce³⁺, Pr³⁺, Sm³⁺, Eu³⁺, Gd³⁺ et Tb³⁺.

2. Caractéristique d'authenticité selon la revendication 1, cependant que
des ions dopés constituent des clusters d'ions couplés par échange et présentent des effets coopératifs qui résultent de l'interaction d'échange entre des électrons non appariés d'ions avoisinants, cependant que les interactions d'échange conduisent à des décompositions mesurables des états électroniques et que le spectre de luminescence des clusters couplés par échange se différencie nettement des spectres de luminescence d'ions uniques des ions dopés, cependant que les ions dopés ont la configuration d'électrons (3*d*)², (3*d*)³ et (3*d*)⁶ ou des configurations d'électrons correspondantes des métaux de transition (4*d*) ou (5*d*) ; et
les réseaux hôtes consistent en des liaisons avec au moins un représentant du groupe des métaux des groupes principaux I, II, métaux de transition et/ou terres rares et au moins un représentant des groupes principaux III et VII du tableau périodique des éléments.

3. Caractéristique d'authenticité selon la revendication 1, cependant que
des ions dopés constituent avec des ions magnétiques du réseau hôte des clusters couplés par échange et présentent des effets coopératifs qui résultent de l'interaction d'échange entre des électrons non appariés d'ions avoisinants, cependant que les interactions d'échange conduisent à des décompositions mesurables des états électroniques et que le spectre des clusters est, à la différence des spectres de luminescence des ions dopés ou bien des ions magnétiques du réseau hôte, complètement différent, cependant que les ions dopés ont la configuration d'électrons (3*d*)², (3*d*)³ et (3*d*)⁶ ou des configurations d'électrons correspondantes des métaux de transition (4*d*) ou (5*d*) et que les ions du réseau hôte sont choisis parmi le groupe constitué par Ce³⁺, Pr³⁺, Sm³⁺, Eu³⁺, Gd³⁺ et Tb³⁺; et
les réseaux hôtes consistent en des liaisons avec au moins un représentant des terres rares et au moins un représentant des non-métaux des groupes principaux III et VII du tableau périodique des éléments, cependant que le au moins un représentant des terres rares est choisi parmi le groupe constitué par Ce³⁺, Pr³⁺, Sm³⁺, Eu³⁺, Gd³⁺ et Tb³⁺.

4. Caractéristique d'authenticité selon la revendication 3, cependant que ces liaisons contiennent en plus un représentant du groupe des métaux du groupe principal 1, II et/ou des métaux de transition.

5. Caractéristique d'authenticité selon une des revendications de 1 à 4, cependant que la substance luminescente se trouve sous forme de particules de pigment.

6. Document de valeur comportant une caractéristique d'authenticité selon une des revendications de 1 à 5, cependant que le document de valeur consiste en du papier et/ou en de la matière plastique.

7. Document de valeur selon la revendication 6, cependant que la caractéristique d'authenticité est incorporée dans le volume du document de valeur et/ou appliquée sur le document de valeur.

8. Document de valeur selon la revendication 6 ou 7, cependant que la substance luminescente est appliquée sous forme de revêtement invisible au moins partiel sur le document de valeur.

9. Document de valeur selon une des revendications de 6 à 8, cependant que la substance luminescente est mélangée à une encre d'impression.

10. Document de valeur selon une des revendications de 6 à 9, cependant que la substance luminescente est combinée avec au moins une autre caractéristique d'authenticité.

11. Document de valeur selon une des revendications de 6 à 10, cependant qu'au moins deux substances luminescentes constituent une codification spectrale en au moins une dimension spatiale.

12. Elément de sécurité qui comporte un matériau support et au moins une caractéristique d'authenticité selon une des revendications de 1 à 5, cependant que la caractéristique d'authenticité est incorporée dans le matériau support et/ou appliquée sur le matériau support.

13. Elément de sécurité selon la revendication 12, cependant que l'élément de sécurité présente la forme d'un ruban ou d'une bande.

14. Elément de sécurité selon la revendication 12 ou 13, cependant que le matériau support est réalisé sous forme de fil de sécurité, planchette ou fibre chinée.

15. Elément de sécurité selon une des revendications de 12 à 14, cependant que l'élément de sécurité est réalisé sous forme d'étiquette.

16. Procédé de fabrication d'un document de valeur selon une des revendications de 6 à 11 ou d'un élément de sécurité selon une des revendications de 12 à 15, cependant que la substance luminescente est ajoutée à une encre d'impression.

17. Procédé de fabrication d'un document de valeur selon au moins une des revendications de 6 à 11 ou d'un élément de sécurité selon une des revendications de 12 à 15, cependant que la substance luminescente est appliquée par un processus de revêtement.

18. Procédé de fabrication d'un document de valeur selon au moins une des revendications de 6 à 11 ou d'un élément de sécurité selon une des revendications de 12 à 15, cependant que la substance luminescente est intégrée dans le volume du document de valeur.

19. Procédé de fabrication d'un document de valeur selon au moins une des revendications de 6 à 11 ou d'un élément de sécurité selon une des revendications de 12 à 15, cependant que la substance luminescente est adjointe au document de valeur par des fibres chinées préparées à cet effet.

20. Procédé de fabrication d'un document de valeur selon au moins une des revendications de 6 à 11 ou d'un élément de sécurité selon une des revendications de 12 à 15, cependant que la substance luminescente est adjointe au document de valeur par un fil de sécurité préparé à cet effet.

21. Procédé de vérification pour la vérification de l'authenticité d'une caractéristique d'authenticité selon une des revendications de 1 à 5 ou d'un document de valeur selon une des revendications de 6 à 11 ou d'un élément de sécurité selon une des revendications de 12 à 15, cependant qu'au moins une propriété des substances luminescentes est évaluée.

22. Procédé de vérification pour la vérification d'authenticité selon la revendication 21, cependant que des longueurs d'ondes et/ou le nombre et/ou la forme et/ou l'intensité des lignes d'émission des substances luminescentes sont évalués.

23. Procédé de vérification pour la vérification d'authenticité selon la revendication 21 ou 22, cependant que les durées de vie de luminescence des substances luminescentes sont évaluées.

24. Procédé de vérification pour la vérification d'authenticité selon une des revendications de 21 à 23, cependant que l'évaluation a lieu à des températures différentes.

25. Procédé de vérification pour la vérification d'authenticité selon une des revendications de 21 à 24, cependant que, lors de l'évaluation, une répartition spatiale de la substance luminescente ou des substances luminescentes est vérifiée.
